# FASCICULE DE BREVET EUROPEEN

(11) **EP 1 554 918 B1**
(45) Date de publication et mention de la délivrance du brevet: **23.07.2008**
(21) Numéro de dépôt: 05300037.8
(22) Date de dépôt: 14.01.2005
(51) Int. Cl.: A01D 33/10, B65G 69/04

(54) **Machine de recolte de produits genre poireaux notamment**
Erntemaschine, insbesondere für Porree und dergleichen
Harvesting machine, particularly for products such as leeks

(30) Priorité: 14.01.2004 FR 0400314
(43) Date de publication de la demande: 20.07.2005
(73) Titulaire: Claire Fontaine SA, 44450 La Chapelle Basse Mer (FR)
(72) Inventeur: Queru, Arnaud, 44390, Petit Mars (FR)
(74) Mandataire: Catherine, Alain

(56) Documents cités:
- EP-A- 1 247 438
- DE-A- 4 022 990
- DE-A- 19 933 589
- US-B1- 6 401 908

## Description

La présente invention concerne le domaine général de la récolte de produits maraîchers. Elle concerne plus particulièrement une machine pour la récolte automatique ou semi-automatique de poireaux.

On connaît déjà des machines de récolte de poireaux portées ou tractées par un véhicule motorisé, constituées d'une unité de récolte assurant l'arrachage des légumes en pleine terre et leur remontée automatique jusqu'à un convoyeur à tapis sans fin. Un opérateur posté au niveau de la partie aval de ce convoyeur de reprise est chargé de récupérer des poignées ou des brassées de poireaux, et de transférer ces produits manuellement dans un conteneur de stockage adapté, aménagé à proximité. Le conteneur de stockage des poireaux est généralement constitué d'un fond rectangulaire monté sur pieds, muni de deux parois d'extrémités et d'une paroi latérale longitudinale. Ce conteneur est porté par le châssis de la machine ; une fois chargé, il est déposé au sol, un nouveau conteneur vide étant installé à sa place.

Les opérations de chargement des poireaux dans le conteneur à partir du convoyeur à tapis sans fin sont relativement pénibles. D'autre part, la présence de l'opérateur manutentionnaire augmente le coût général de la récolte.

Des machines de ce type ont été perfectionnées, de la manière décrite dans le document DE-199 33 589, en particulier pour conférer des possibilités de mouvement relatif entre le convoyeur à tapis sans fin et le conteneur de stockage, de manière à permettre une automatisation du chargement des poireaux. Mais les installations correspondantes ne sont pas encore entièrement satisfaisantes.

D'autres machines entièrement automatisées ont été développées, fonctionnant sur le principe de courroies serrantes venant déposer les poireaux récoltés directement dans le conteneur de stockage.
Mais les machines correspondantes ont une structure complexe et leur coût est relativement élevé ; de plus, le produit présente des risques d'altération.

La présente invention propose une nouvelle machine pour la récolte des poireaux, de structure simple et d'un coût de revient intéressant, pouvant fonctionner sans opérateur manutentionnaire ou, dans le cas où la présence d'un tel opérateur est préférable, limitant sensiblement la pénibilité de son travail.

La machine de récolte conforme à l'invention comprend, montés sur un châssis motorisé ou muni de moyens d'attelage à un véhicule tracteur :
- une unité de récolte,
- un convoyeur à tapis sans fin de reprise des produits récoltés, lequel convoyeur reçoit lesdits produits récoltés du côté de son extrémité amont et transporte ces produits vers son extrémité aval, et lequel convoyeur est associé à des moyens de manoeuvre aptes à lui conférer un mouvement de va-et-vient sur son axe longitudinal, de sorte que son extrémité aval balaie une surface définie S, et
- un conteneur de stockage des produits, ouvert en partie supérieure, aménagé du côté de l'extrémité aval dudit convoyeur. Ce conteneur comporte un fond carré ou rectangulaire de réception des produits, associé à des parois latérales de cloisonnement, et il est positionné de telle sorte que son fond soit disposé au moins sous l'intégralité de ladite surface S, de manière à ce que les produits récoltés puissent tomber par simple gravité dans ledit conteneur, tout en étant répartis sensiblement par rangée sur au moins une partie du fond de ce dernier. Ce conteneur de stockage est encore muni d'une première paroi d'extrémité par-dessus laquelle le convoyeur sans fin est destiné à se déplacer, d'une seconde paroi d'extrémité, en regard, et d'au moins une paroi longitudinale latérale venant relier lesdites parois d'extrémités ; la première paroi d'extrémité a une structure adaptée pour permettre son extension depuis une position basse de sa bordure supérieure, sous le niveau de la bordure supérieure des autres parois, jusqu'à une position haute de sa bordure supérieure, correspondant sensiblement au niveau de la bordure supérieure des autres parois ; en outre, le châssis support de la machine comporte des moyens d'accrochage amovible de la bordure supérieure de la paroi d'extrémité extensible du conteneur, et ce conteneur est monté sur des moyens supports mobiles verticalement, associés à des moyens de manoeuvre, pour assurer son déplacement vers le bas au fur et à mesure de son remplissage, et, simultanément, pour assurer le relevage de ladite paroi extensible.

Le convoyeur à tapis sans fin de cette machine de récolte est avantageusement associé à des capteurs de position adaptés pour détecter les deux positions extrêmes de son mouvement de balayage, en vue de commander l'inversion de son mouvement de déplacement par les moyens de manoeuvre associés.

Selon une autre caractéristique préférentielle, la surface balayée S correspond sensiblement à la surface du fond du conteneur, le fond de ce conteneur étant positionné intégralement ou quasi intégralement sous ladite surface S.

Selon une forme de réalisation particulière, le convoyeur à tapis sans fin est muni de moyens de guidage en forme de galets circulant dans des glissières, et il est associé à des moyens de manoeuvre en forme de vérin(s).

Selon une autre caractéristique particulièrement intéressante, le tapis sans fin du convoyeur de reprise des produits est géré en avancement de manière à conserver sensiblement la même vitesse dans l'espace, que ledit convoyeur soit immobile ou qu'il se déplace dans un sens ou dans l'autre, de manière à assurer une dépose régulière ou sensiblement régulière, sur ledit tapis, des produits provenant de l'unité de récolte.

Selon encore une autre particularité, la machine de récolte conforme à l'invention comporte un convoyeur adapté pour balayer une surface S sensiblement depuis une première paroi d'extrémité du conteneur, au-dessus de laquelle il se déplace, jusqu'à sensiblement une deuxième paroi d'extrémité disposée en regard, le mouvement de déplacement dudit convoyeur depuis ladite première paroi d'extrémité jusqu'à sensiblement ladite seconde paroi d'extrémité, correspondant au mouvement « aller », s'effectuant avec le tapis sans fin de convoyeur arrêté, pour éviter la dépose des produits, et le mouvement de déplacement dudit convoyeur depuis sensiblement ladite seconde paroi d'extrémité jusqu'à ladite première paroi d'extrémité, correspondant au mouvement « retour » du convoyeur, s'effectuant avec le tapis sans fin de convoyeur en mouvement, pour assurer la dépose des produits dans le conteneur.

Les moyens supports du conteneur sont de préférence associés à des moyens de manoeuvre commandés par l'un au moins des capteurs de position du convoyeur.

Les moyens supports du conteneur assurent avantageusement sa descente pas à pas, après chaque cycle de dépose des rangées de produits, le pas de descente correspondant étant adapté à la dimension et à la quantité de produits déversés lors de chaque cycle, le mouvement de descente en question s'accompagnant d'un mouvement relatif de fermeture de la paroi d'extrémité extensible du conteneur dont la bordure supérieure est accrochée sur le châssis support.

Selon une forme de réalisation préférée, la paroi d'extrémité extensible du conteneur est constituée d'au moins deux volets télescopiques, l'un fixe et l'autre mobile. De préférence encore, cette paroi d'extrémité extensible est constituée d'au moins trois volets télescopiques, le volet inférieur étant fixe et les autres volets étant mobiles, chaque volet mobile étant muni de moyens permettant le déploiement du volet mobile immédiatement sous jacent, une fois lui-même complètement déployé.

De préférence, la bordure supérieure de la paroi d'extrémité extensible est munie de moyens qui permettent son accrochage sur un système de crochetage adapté, aménagé sur le châssis de la machine de récolte.

Selon une autre particularité, la paroi d'extrémité extensible du conteneur est munie de moyens qui permettent son verrouillage en position déployée.

Toujours selon une autre caractéristique, le conteneur comporte une paroi longitudinale latérale comportant un panneau fixe inférieur sur la bordure supérieure horizontale duquel est articulé un panneau mobile supérieur muni de moyens qui permettent son verrouillage en position de cloisonnement.

Mais l'invention sera encore illustrée, sans être aucunement limitée, par la description suivante d'un mode de réalisation particulier, donné uniquement à titre d'exemple et représenté sur les dessins annexés dans lesquels :
- la figure 1 est une représentation schématique d'une machine de récolte conforme à l'invention, vue par-dessus et associée à un véhicule tracteur, le convoyeur à tapis sans fin étant illustré dans l'une de ses positions extrêmes ;
- la figure 2 est une vue partielle, similaire à la figure 1, dans laquelle le convoyeur à tapis sans fin est illustré dans son autre position extrême ;
- la figure 3 est une vue schématique d'extrémité qui illustre le guidage du convoyeur à tapis sans fin et la structure particulière du conteneur de stockage des produits, le convoyeur étant illustré ici dans l'une de ses positions extrêmes et la paroi extensible du conteneur de stockage étant en position basse ;
- la figure 4 est une vue similaire à la figure 3, avec le convoyeur à tapis sans fin toujours dans la même position extrême, mais le conteneur de stockage des produits ayant été abaissé, sa paroi extensible étant alors en position relevée ;
- la figure 5 est une vue similaire à la figure 3 montrant le convoyeur de stockage dans son autre position extrême ;
- la figure 6 est une vue schématique de côté montrant l'extrémité aval du convoyeur de reprise des produits, associé à un dispositif permettant le contrôle de la chute des produits dans le conteneur de stockage ;
- la figure 7 est une vue en perspective d'une forme de réalisation possible d'un conteneur de stockage conforme à l'invention.

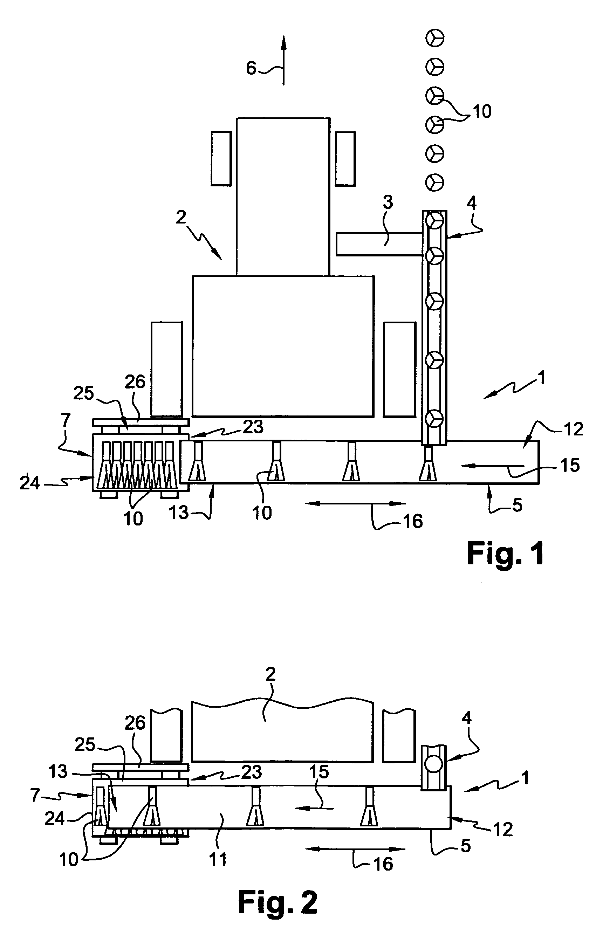

Les figures 1 à 5 illustrent une machine de récolte de poireaux 1 conforme à l'invention, associée à un véhicule tracteur 2 tel qu'un tracteur agricole. La machine de récolte 1 comporte à cet effet un châssis sur roues équipé d'un système d'attelage adapté (non représenté).

Cette machine de récolte est principalement constituée, montés sur le châssis repéré schématiquement 3, - d'une unité de récolte 4 qui s'étend sur le côté du véhicule tracteur 2, - d'un convoyeur à tapis sans fin 5 disposé à l'arrière du véhicule tracteur 2, transversalement à la direction de déplacement 6 de ce véhicule, et - d'un conteneur 7 permettant le stockage des produits 10 après récolte.

L'unité de récolte 4 consiste en un cueilleur classique, par exemple du type à bandes serrantes qui assurent l'arrachage des produits 10 en pleine terre et leur transfert jusqu'au convoyeur de reprise 5.

Le convoyeur 5 est du type à tapis sans fin 11 (bande transporteuse, tapis à barreaux ou autres ...) s'enroulant sur deux tambours d'extrémité dont l'un est motorisé. L'extrémité amont 12 de ce convoyeur 5 est située sous l'extré mité aval de l'unité de récolte 4 pour assurer la reprise des produits récoltés 10, et son extrémité aval 13 est située du côté du conteneur de stockage 7.
La motorisation de l'un des tambours du convoyeur 5 est adaptée pour faire avancer le brin supérieur du tapis 11 selon la flèche d'orientation 15 de manière à assurer le transfert des produits récoltés 10 depuis l'unité de récolte 4 jusqu'au conteneur 7.

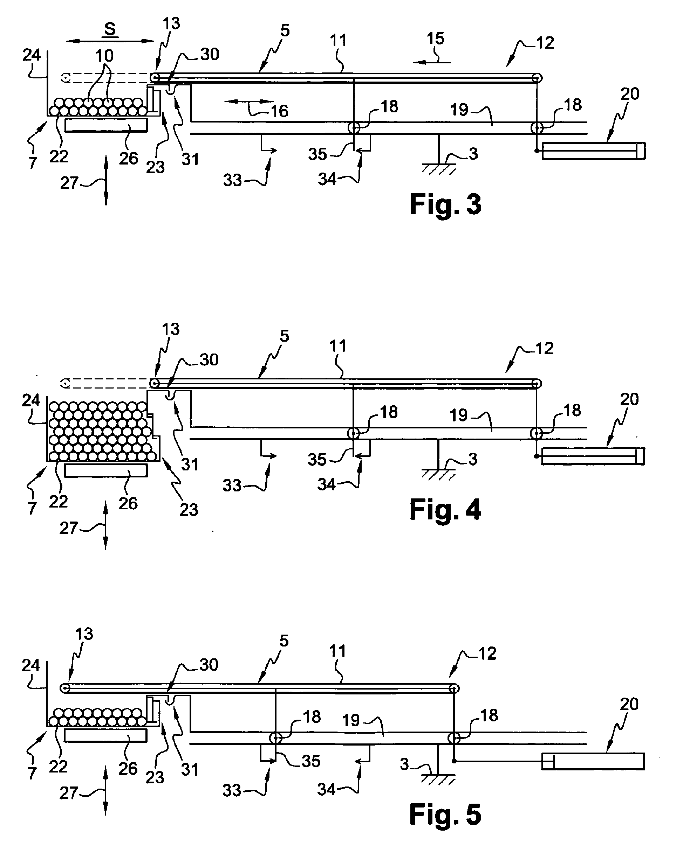

Comme on peut le voir sur les figures 3 à 5, le convoyeur 5 est monté mobile sur le châssis 3 de la machine pour permettre de lui conférer un mouvement de va-et-vient décrit plus en détail ci-après. Le mouvement de va-et-vient correspondant, illustré par la double flèche d'orientation 16 sur les figures 1 à 3, s'effectue sur l'axe longitudinal du convoyeur 5, ici transversalement à la direction d'avancement 6 du véhicule tracteur 2.

Pour cela, le bâti du convoyeur 5 est équipé de galets 18 qui se déplacent dans des rails de guidage 19, et ce bâti est associé à des moyens de manoeuvre 20, ici en forme de vérin hydraulique (plusieurs vérins 20 peuvent être combinés, selon la course de déplacement désirée).

Le conteneur de stockage 7 disposé du côté de l'extrémité aval 13 du convoyeur 5 est ouvert en partie supérieure ; il est constitué d'un fond 22 carré ou rectangulaire, d'une première paroi d'extrémité 23, d'une seconde paroi d'extrémité 24, en regard, et d'une seule paroi latérale longitudinale 25 visible sur les figures 1 et 2. Cette structure générale de conteneur, avec une paroi latérale 25 unique, est classique dans le domaine de la récolte des poireaux ; il s'agit d'une particularité liée aux installations utilisées pour le traitement ultérieur des produits (déstockage, lavage ...).

Le conteneur 7 présente ici la particularité d'avoir une première paroi d'extrémité 23 extensible depuis une position basse de sa bordure supérieure (figures 3 et 5), sous le niveau de la bordure supérieure des deux autres parois 24, 25, jusqu'à une position haute de sa bordure supérieure (figure 4) qui correspond sensiblement au niveau des deux autres parois 24, 25.
La structure de cette paroi extensible 23 sera détaillée plus loin.

Le châssis 3 de la machine de récolte comporte des moyens 26 de support du conteneur 7 qui sont mobiles verticalement, associés à des moyens de manoeuvre adaptés, schématisés en 27 sur les figures 3 à 5. Les moyens supports 26 peuvent par exemple consister en une structure de type fourche d'élévateur, les moyens de manoeuvre 27 consistant en un ou plusieurs vérins hydrauliques.

La bordure supérieure de la paroi extensible 23 du conteneur 7 comporte des moyens 30 (par exemple en forme de simple patte), qui permettent sa solidarisation avec un système de crochetage 31 adapté, aménagé sur le châssis 3 de la machine. Comme on va l'expliquer en détail ci-après, ces moyens d'accrochage 30-31 vont permettre le déploiement automatique de la paroi extensible 23 au fur et à mesure du déplacement vers le bas du conteneur 7.

Le mouvement de va-et-vient 16 du convoyeur 5 est adapté pour que son extrémité aval 13 balaie une surface S (figure 3) correspondant sensiblement à l'intégralité de la surface du fond 22 du conteneur 7, de manière à assurer la dépose des produits récoltés directement dans ce conteneur 7, et ceci de la manière la plus régulière possible, rangée par rangée.
Les moyens supports 26 sont adaptés en conséquence pour positionner correctement le conteneur 7 sous la surface balayée S.

Pour assurer le mouvement de va-et-vient du convoyeur 5, la machine de récolte comporte des capteurs de position 33 et 34 aptes à détecter ses deux positions extrêmes. Ces capteurs 33 et 34 coopèrent avec un ou plusieurs organe(s) 35 solidaire(s) du bâti du convoyeur, pour assurer leur fonction ; ils envoient leurs informations à un automate programmable (non représenté) apte notamment à piloter le fonctionnement du vérin 20 pour commander l'inversion des mouvements de déplacement du convoyeur, et à piloter les moyens de manoeuvre 27 du support de conteneur 26.

Le fonctionnement de la machine de récolte conforme à l'invention va maintenant être détaillé en relation avec les figures 3 à 5.

Dans un premier temps, le support 26 du conteneur 7 est placé en position haute, la paroi extensible 23 du conteneur étant rétractée au maximum, et sa bordure supérieure étant solidarisée avec le châssis 3 de la machine par l'intermédiaire des moyens d'accrochage 30-31 décrits précédemment. Le convoyeur 5 se situe dans une position extrême basse par rapport au fond 22 du conteneur de sorte qu'il va pouvoir déposer convenablement les produits provenant de l'unité de récolte 4 dans le conteneur 7, par son mouvement de va-et-vient et en association avec l'avance du brin supérieur du tapis 11 (les produits vont chuter dans le conteneur 7 d'une hauteur minimale).

Lors de son mouvement de va-et-vient dont les positions extrêmes sont illustrées sur les figures 3 et 5, l'extrémité aval du convoyeur 5 balaie la surface S correspondant sensiblement à la surface du fond du conteneur 7, depuis la paroi d'extrémité extensible 23 au-dessus de laquelle il se déplace (figure 3) jusqu'à sensiblement la paroi d'extrémité 24 située en regard (figure 5). Les positions extrêmes correspondantes sont ajustées pour assurer un remplissage optimum du conteneur.

Au fur et à mesure des mouvements de va-et-vient et de remplissage du conteneur, les moyens de commande 27 abaissent le support 26, de manière à assurer une hauteur de chute minimale et sensiblement constante des produits. L'abaissement correspondant est réalisé de préférence après chaque cycle de dépose des rangées de produits ; le pas de descente utilisé est adapté à la dimension et à la quantité de produits déversés lors de chaque cycle.

Le fait de faire chuter les produits dans le conteneur 7 d'une hauteur minimale est rendu possible par la présence de la paroi extensible 23. On comprend bien que cette paroi 23 se développe progressivement du fait de l'abaissement du support 26 et de l'accrochage de sa bordure supérieure sur le châssis fixe de la machine.

Les produits 10 sont déposés transversalement sur le convoyeur 5 par l'unité de récolte 4 et ils tombent dans cette position transversale dans le conteneur 7. On obtient ainsi de manière automatique un rangement correct des produits dans le conteneur, et ceci avec des perturbations minimales limitant les risques d'altération.

Lorsque le conteneur 7 est totalement chargé, la paroi extensible 23 est verrouillée en position haute (des moyens de verrouillage adaptés sont prévus à cet effet) ; ce conteneur chargé est déposé au sol sur le côté de la machine, et il est remplacé par un conteneur vide en vue d'un nouveau chargement.

On peut envisager de stopper manuellement l'ensemble des éléments de la machine de récolte lorsqu'on constate que le conteneur de stockage est plein. Cet arrêt peut aussi s'effectuer automatiquement, au moyen de capteurs appropriés aménagés par exemple au niveau du support de conteneur 26.

D'autre part, le verrouillage de la paroi extensible 23 en position haute peut s'effectuer automatiquement lors de la désactivation des moyens de crochetage 31.

De préférence, la dépose des produits 10 dans le conteneur 7 s'effectue uniquement lorsque le convoyeur 5 se retire du conteneur 7, c'est-à-dire lors de son déplacement depuis la paroi d'extrémité 24 vers la paroi d'extrémité 23.
Ce déplacement, encore appelé « mouvement de retour » correspond au mouvement vers la droite du convoyeur illustré sur les figures 3 à 5.
Lors de ce mouvement « retour » du convoyeur, le tapis sans fin 11 est entraîné par son tambour motorisé pour assurer la chute des produits dans le conteneur 7.
Le mouvement inverse du convoyeur (dit mouvement « aller »), depuis la paroi extensible 23 jusqu'à la paroi 24 en regard, s'effectue avec le tapis sans fin 11 arrêté.

On notera qu'il sera possible de stopper un petit moment (quelques dixièmes de secondes par exemple) le convoyeur 5 en regard de la paroi d'extrémité 24, après remise en mouvement du tapis sans fin 11, pour obtenir un remplissage optimum du conteneur 7.

La gestion correspondante des mouvements est assurée par l'automate programmable de la machine, en fonction notamment des informations provenant des capteurs 33 et 34.

En outre, pour assurer une dépose régulière, sur le tapis 11, des produits 10 provenant de l'unité de récolte 4, l'automate programmable gère les mouvements d'avance dudit tapis 11 de manière à lui faire conserver sensiblement la même vitesse dans l'espace, que le convoyeur soit immobile, ou qu'il se déplace dans un sens ou dans l'autre.
Ainsi, par exemple :
- lors du mouvement « aller » du convoyeur 5, le tapis 11 est arrêté sur ses tambours d'extrémités ; la vitesse de translation du bâti du convoyeur est par exemple de 30 cm/s (donc la vitesse de déplacement des produits posés sur le tapis 11 est aussi de 30 cm/s),
- lors de l'arrêt du convoyeur 5 en regard de la paroi d'extrémité 24, le tapis 11 est entraîné par son tambour motorisé pour que la vitesse de son brin supérieur soit de 30 cm/s, et
- lors du mouvement « retour » du convoyeur, par exemple à une vitesse de 15 cm/s, la vitesse de défilement du tapis 11 sur ses tambours est réglée à 45 cm/s (de façon à conserver une vitesse relative des produits vers le conteneur 7 de 30 cm/s).

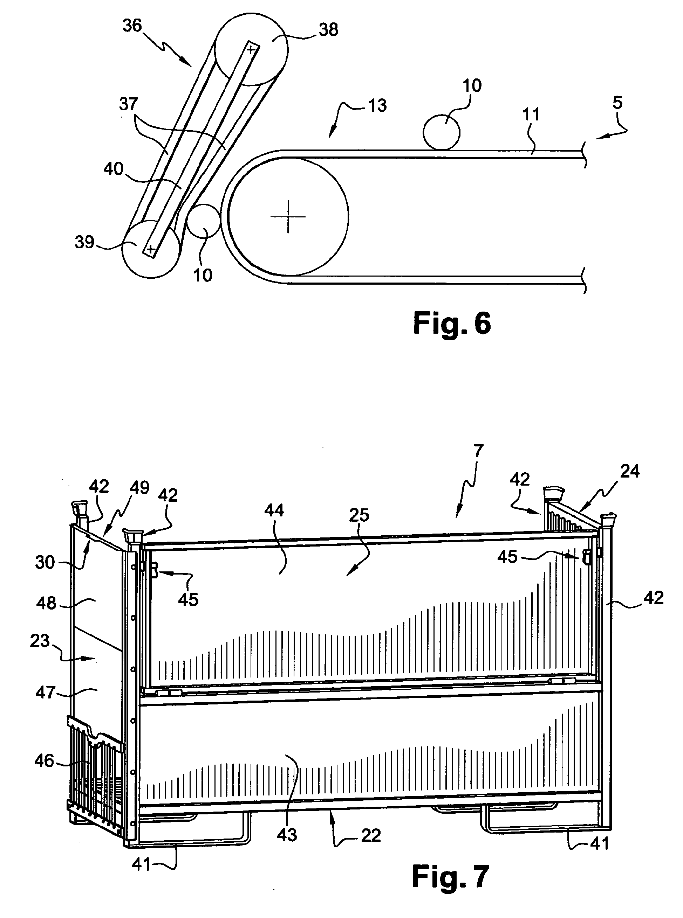

Tel qu'illustré sur la figure 6, l'extrémité aval 13 du convoyeur 5 peut être équipée d'un dispositif 36 permettant d'optimiser la dépose des produits 10 dans le conteneur 7, en retardant au maximum leur chute et en contrôlant au mieux cette chute.
Ce dispositif 36 consiste en une courroie de retenue 37 guidée par deux galets 38 et 39 montés sur un support 40 solidaire du bâti du convoyeur (les moyens de solidarisation correspondants n'ont pas été représentés sur la figure 6).

Le dispositif de retenue 36 est positionné de manière à ce que la courroie 37 ait la possibilité d'assurer le plaquage des produits 10 le plus longtemps possible sur la partie courbe de l'extrémité du convoyeur 5. Selon le mode de réalisation illustré schématiquement sur la figure 6, on comprend que les produits sont maintenus pincés entre la courroie 37 et le tapis 11 sensiblement jusqu'à l'axe du tambour de guidage d'extrémité du convoyeur. Le pincement en question permet de libérer les produits 10 à un niveau plus bas que le plan du brin supérieur du tapis 11, et la libération correspondante s'effectue dans le vide, ce qui optimise la dépose et le rangement desdits produits dans le conteneur de stockage.

La courroie de retenue 37 tourne autour des galets 38 et 39 par le frottement des produits 10 ; elle est avantageusement réalisée en matériau souple compressible pour éviter d'abîmer les produits. Elle peut avoir une largeur d'une dizaine de centimètres et elle est avantageusement centrée sur l'axe du convoyeur 5.
Le support 40 du dispositif de retenue 36 peut être solidarisé avec le bâti du convoyeur par des moyens lui assurant une certaine possibilité de mouvement, pour optimiser le pincement des produits 10 et pour absorber au mieux leurs éventuelles différences dimensionnelles.

Une forme de réalisation particulière du conteneur de stockage 7 est représentée sur la figure 7.
On retrouve - le fond 22 de forme générale rectangulaire, - une première paroi d'extrémité 23, - une seconde paroi d'extrémité 24 située de l'autre côté du fond 22 en regard de la paroi 23, et - une paroi latérale longitudinale 25 reliant les deux parois d'extrémités 23 et 24 sur l'un des côtés du fond 22. L'autre côté du conteneur est dépourvu de paroi latérale. Le fond 22 est monté sur des pieds 41.
Les trois parois latérales 23, 24 et 25 sont maintenues par des montants verticaux 42.
La paroi d'extrémité 24 est fixe et est ici sous forme grillagée.
La paroi latérale 25 est constituée d'un panneau fixe inférieur 43, sur la bordure supérieure duquel est articulé un panneau mobile supérieur 44. En partie haute, le panneau mobile 44 comporte des moyens 45 qui permettent son verrouillage en position de cloisonnement. Ces moyens 45 peuvent se présenter sous la forme de clavettes latérales coopérant avec des orifices appropriés aménagés dans les montants 42.

La présence de ce panneau mobile 44 peut trouver un intérêt dans le cadre de la mise en oeuvre de certaines installations de traitement des produits, ultérieurement à la récolte.

La paroi d'extrémité 23 est de type extensible, et plus particulièrement télescopique. Elle est constituée de trois volets : l'un inférieur fixe 46, l'autre intermédiaire mobile 47 et le troisième supérieur 48, également mobile.
Les trois volets 46, 47 et 48 ont la possibilité de se superposer de manière à ce que la bordure supérieure 49 de la paroi 23 soit située à un niveau inférieur par rapport à la bordure supérieure des deux autres parois 24 et 25. Ils ont également la possibilité de se déployer pour arriver à la configuration illustrée sur la figure 7, dans laquelle cette bordure supérieure 49 se situe au même niveau que la bordure supérieure des deux parois 24 et 25.
Les deux volets mobiles 47 et 48 coulissent dans des glissières aménagées le long des montants 42. Une fois complètement déployé, le volet supérieur 48 entraîne le volet intermédiaire 47, par exemple par un système de butées adaptées au niveau de leurs extrémités en regard.
Au niveau de sa bordure supérieure 49, le volet supérieur 48 comporte un retour extérieur à l'équerre 30. La partie centrale de ce retour 30 est adaptée, comme expliqué précédemment, pour coopérer avec la structure d'accrochage 31 de la machine de récolte ; les extrémités latérales de ce retour 30 sont repliées au-delà de 90° de façon à permettre leur accrochage au niveau de la partie supérieure des glissières, ceci de manière naturelle du fait de la poussée des produits stockés, pour assurer le verrouillage de la paroi 23 en position déployée. Ce verrouillage peut s'effectuer automatiquement, par les simples caractéristiques d'élasticité du volet supérieur 48.

## Revendications

1. Machine de récolte de produits genre poireaux notamment, laquelle machine comprend, montés sur un châssis (3) motorisé ou muni de moyens d'attelage à un véhicule tracteur (2) :
- une unité de récolte (4),
- un convoyeur (5) à tapis sans fin (11) de reprise des produits (10) récoltés, lequel convoyeur (5) reçoit lesdits produits récoltés (10) du côté de son extrémité amont (12) et transporte lesdits produits (10) vers son extrémité aval (13), et lequel convoyeur (5) est associé à des moyens de manoeuvre (20) aptes à lui conférer un mouvement de va-et-vient sur son axe longitudinal, de sorte que son extrémité aval (13) balaie une surface définie S, et
- un conteneur (7) de stockage desdits produits (10), ouvert en partie supérieure, aménagé du côté de l'extrémité aval (13) dudit convoyeur (5), lequel conteneur (7) comporte un fond (22) carré ou rectangulaire de réception des produits (10), associé à des parois latérales de cloisonnement (23, 24, 25), et lequel conteneur (7) est positionné de telle sorte que son fond (22) soit disposé au moins sous l'intégralité de ladite surface S balayée par l'extrémité aval (13) dudit convoyeur (5), de manière à ce que les produits récoltés (10) puissent tomber par simple gravité dans ledit conteneur (7), tout en étant répartis sensiblement par rangées sur au moins une partie du fond (22) de ce dernier, ledit conteneur (7) étant muni d'une première paroi d'extrémité (23) par-dessus laquelle le convoyeur sans fin (5) est destiné à se déplacer, d'une seconde paroi d'extrémité (24) en regard, et d'au moins une paroi longitudinale latérale (25) venant relier lesdites parois d'extrémités (23, 24), **caracterisée en ce que** ladite première paroi d'extrémité (23) a une structure adaptée pour permettre son extension depuis une position basse de sa bordure supérieure (49), sous le niveau de la bordure supérieure des autres parois (24, 25), jusqu'à une position haute de sa bordure supérieure (49), correspondant sensiblement au niveau de la bordure supérieure des autres parois (24, 25), le châssis support (3) de la machine comportant des moyens d'accrochage amovible (31) de la bordure supérieure (49) de ladite paroi d'extrémité extensible (23), et ledit conteneur (7) étant monté sur des moyens supports (26) mobiles verticalement, associés à des moyens de manoeuvre (27), pour assurer son déplacement vers le bas au fur et à mesure de son remplissage, et, simultanément pour assurer le relevage de ladite paroi extensible (23).

2. Machine de récolte selon la revendication 1, **caractérisé en ce que** le convoyeur (5) est associé à des capteurs de position (33, 34) adaptés pour détecter les deux positions extrêmes de son mouvement de balayage, en vue de commander l'inversion de son mouvement de déplacement par les moyens de manoeuvre associés (20).

3. Machine de récolte selon l'une quelconque des revendications 1 ou 2, **caractérisée en ce que** la surface balayée S correspond sensiblement à la surface du fond (22) du conteneur (7), le fond (22) dudit conteneur (7) étant positionné intégralement ou quasi intégralement sous ladite surface S.

4. Machine de récolte selon l'une quelconque des revendications 1 à 3, **caractérisée en ce que** le convoyeur sans fin (5) est muni de moyens de guidage en forme de galets (18) circulant dans des glissières (19), et est associé à des moyens de manoeuvre en forme de vérin(s) (20).

5. Machine de récolte selon l'une quelconque des revendications 1 à 4, **caractérisée en ce que** le tapis sans fin (11) du convoyeur (5) est géré en avancement de manière à conserver sensiblement la même vitesse dans l'espace, que ledit convoyeur (5) soit immobile ou qu'il se déplace dans un sens ou dans l'autre, de manière à assurer une dépose régulière ou sensiblement régulière, sur ledit tapis (11), des produits (10) provenant de l'unité de récolte (4).

6. Machine de récolte selon l'une quelconque des revendications 1 à 5, **caractérisée en ce que** le convoyeur (5) est adapté pour balayer une surface S sensiblement depuis une première paroi d'extrémité (23) du conteneur (7) au-dessus de laquelle il se déplace, jusqu'à sensiblement une deuxième paroi d'extrémité (24) disposée en regard, le mouvement de déplacement dudit convoyeur (5) depuis ladite première paroi (23) jusqu'à sensiblement ladite seconde paroi (24), correspondant au mouvement « aller », s'effectuant avec le tapis sans fin (11) arrêté, pour éviter la dépose des produits (10), et le mouvement de déplacement dudit convoyeur (5) depuis sensiblement ladite seconde paroi (24) jusqu'à ladite première paroi (23), correspondant au mouvement « retour » du convoyeur (5), s'effectuant avec le tapis sans fin (11) en mouvement, pour assurer la dépose des produits (10) dans ledit conteneur (7).

7. Machine de récolte selon la revendication 2, **caractérisée en ce que** les moyens supports (26) du conteneur (7) sont associés à des moyens de manoeuvre (27) commandés par l'un au moins des capteurs de position (33, 34) du convoyeur (5).

8. Machine de récolte selon la revendication 7, **caractérisée en ce que** les moyens supports (26, 27) du conteneur (7) assurent sa descente pas à pas, après chaque cycle de dépose des rangées de produits (10), le pas de descente correspondant étant adapté à la dimension et à la quantité de produits déversés lors de chaque cycle, le mouvement de descente en question s'accompagnant d'un mouvement relatif de fermeture de la paroi d'extrémité extensible (23) dont la bordure supérieure (49) est accrochée sur le châssis support (3).

9. Machine de récolte selon l'une quelconque des revendications 1 à 8, **caractérisée en ce que** son conteneur (7) comporte une paroi d'extrémité extensible (23) constituée d'au moins deux volets télescopiques, l'un fixe (46) et l'autre mobile (48).

10. Machine de récolte selon la revendication 9, **caractérisé en ce que** son conteneur (7) comporte une paroi d'extrémité extensible (23) constituée d'au moins trois volets télescopiques (46, 47, 48), le volet inférieur (46) étant fixe et les autres volets (47, 48) étant mobiles, lesdits volets mobiles étant munis de moyens permettant le déploiement du volet mobile immédiatement sous-jacent, une fois lui-même complètement déployé.

11. Machine de récolte selon l'une quelconque des revendications 1 à 10, **caractérisé en ce que** son conteneur (7) comporte une paroi d'extrémité extensible (23) dont la bordure supérieure (49) est munie de moyens (30) qui permettent son accrochage sur un système de crochetage (31) adapté, aménagé sur le châssis (3) de ladite machine.

12. Machine de récolte selon l'une quelconque des revendications 1 à 11, **caractérisé en ce que** son conteneur (7) comporte une paroi d'extrémité extensible (23) munie de moyens (30) qui permettent son verrouillage en position déployée.

13. Machine de récolte selon l'une quelconque des revendications 1 à 12, **caractérisé en ce que** son conteneur (7) comporte une paroi longitudinale latérale (25) comportant un panneau fixe inférieur (43) sur la bordure supérieure duquel est articulé un panneau mobile supérieur (44) muni de moyens qui permettent son verrouillage (45) en position de cloisonnement.

## Claims

1. A machine for harvesting products such as leeks in particular, which machine includes, mounted on a chassis (3) which is powered or fitted with means for coupling to a tractor vehicle (2) :
- a harvesting unit (4),
- a conveyor (5) fitted with an endless belt (11) for picking up the products (10) harvested, which conveyor (5) receives said harvested products (10) on its upstream end side (12) and carries said products (10) toward its downstream end (13), and which conveyor (5) is associated with operating means (20) capable of conferring thereto a back-and-forth movement on its longitudinal axis, so that its downstream end (13) sweeps a defined surface S, and
- a container (7) for storing said products (10), open in its upper section, provided on the downstream end side (13) of said conveyor (5), which container (7) includes a square or rectangular bottom (22) for receiving the products (10), associated with lateral partition walls (23, 24, 25), and which container (7) is positioned so that its bottom (22) is arranged at least under whole said surface S swept by the downstream end (13) of said conveyor (5), so that the harvested products (10) may fall by simple gravity in said container (7), while being distributed substantially in rows on at least a portion of the bottom (22) of the latter, said container (7) being fitted with a first end wall (23) over which the endless conveyor (5) is intended for moving, from a second opposite end wall (24), and with at least one lateral longitudinal wall (25) connecting said end walls (23, 24) **characterised in that** said first end wall (23) has a structure suitable to enable its extension from a lower position of its upper edge (49), under the level of the upper edge of the other walls (24, 25), up to an upper position of its upper edge (49), corresponding substantially to the level of the upper edge of the other walls (24, 25), the supporting chassis (3) of the machine including removable hooking means (31) of the upper edge (49) of said extensible end wall (23), and said container (7) being mounted on supporting means (26) mobile vertically, associated with operating means (27), for ensuring its displacement downwards as it is being filled up, and, simultaneously for raising said extensible wall (23).

2. A harvesting machine according to claim 1, **characterised in that** the conveyor (5) is associated with position sensors (33, 34) adapted for detecting both end positions of its sweeping movement, in order to control the reversal of its displacement movement by the associated operating means (20).

3. A harvesting machine according to any of the claims 1 or 2, **characterised in that** the swept surface S corresponds substantially to the surface of the bottom (22) of the container (7), the bottom (22) of said container (7) being positioned integrally or quasi integrally below said surface S.

4. A harvesting machine according to any of the claims 1 to 3, **characterised in that** the endless conveyor (5) is fitted with guiding means in the form of rollers (18) running in rails (19), and is associated with operating means in the form of jack(s) (20).

5. A harvesting machine according to any of the claims 1 to 4, **characterised in that** the endless belt (11) of the conveyor (5) is controlled in its progress so as to keep substantially the same speed in space, that said conveyor (5) is immovable or that it moves in either direction, so as to ensure regular or substantially regular laying, on said belt (11), of the products (10) from the harvesting unit (4).

6. A harvesting machine according to any of the claims 1 to 5, **characterised in that** the conveyor (5) is adapted for sweeping a surface S substantially from a first end wall (23) of the container (7) above which it moves, up to substantially a second end wall (24) arranged opposite, the displacement movement of said conveyor (5) from said first wall (23) up to substantially said second wall (24), corresponding to the "outward" movement, occurring with the endless belt (11) stopped, for preventing the laying of the products (10), and the displacement movement of said conveyor (5) from substantially said second wall (24) up to said first wall (23), corresponding to the "recall" movement of the conveyor (5), occurring with the endless belt (11) in motion, for ensuring the laying of the products (10) in said container (7).

7. A harvesting machine according to claim 2, **characterised in that** the supporting means (26) of the container (7) are associated with operating means (27) controlled by one at least of the position sensors (33, 34) of the conveyor (5).

8. A harvesting machine according to claim 7, **characterised in that** the supporting means (26, 27) of the container (7) ensure its stepwise descent, after each laying cycle of the rows of products (10), the corresponding pitch of descent being adapted to the dimension and to the amount of products dumped during each cycle, the descent movement in question being accompanied by a relative closing movement of the extensible end wall (23) whereof the upper edge (49) is hooked on the supporting chassis (3).

9. A harvesting machine according to any of the claims 1 to 8, **characterised in that** its container (7) includes an extensible end wall (23) formed of at least two telescopic shutters, one fixed (46) and the other mobile (48).

10. A harvesting machine according to claim 9, **characterised in that** its container (7) includes an extensible end wall (23) formed of at least three telescopic shutters (46, 47, 48), the lower shutter (46) being fixed and the other shutters (47, 48) being mobile, said mobile shutters being fitted with means enabling the deployment of the mobile shutter immediately underlying, once itself deployed completely.

11. A harvesting machine according to any of the claims 1 to 10, **characterised in that** its container (7) includes an extensible end wall (23) whereof the upper edge (49) is fitted with means (30) which enable to attach it on a hooking system (31) dedicated to that end, provided on the chassis (3) of said machine.

12. A harvesting machine according to any of the claims 1 to 11, **characterised in that** its container (7) includes an extensible end wall (23) fitted with means (30) which enable to lock it in deployed position.

13. A harvesting machine according to any of the claims 1 to 12, **characterised in that** its container (7) includes a lateral longitudinal wall (25) including a lower fixed panel (43) on the upper edge of which is jointed an upper mobile panel (44) fitted with means which enable its locking (45) in partitioning position.

## Patentansprüche

1. Erntemaschine insbesondere für Produkte von der Art Porree; wobei die Maschine; auf einem motorisierten oder mit Anhängemitteln an ein Zugfahrzeug (2) ausgestatteten Gestell (3) montiert, umfasst:
- eine Ernteeinheit (4),
- einen Förderer (5) mit Endlosband (11) zur Aufnahme der geernteten Produkte (10), wobei der Förderer (5) die geernteten Produkte (10) auf der Seite seines stromaufwärtigen Endes (12) aufnimmt und die Produkte (10) zu seinem stromabwärtigen Ende (13) transportiert, und wobei der Förderer (5) mit Betätigungsmitteln (20) verbunden ist, die ihm eine Hin- und Herbewegung auf seiner Längsachse verleihen können, so dass ein stromabwärtiges Ende (13) über eine definierte Fläche S gleitet, und
- einen Lagerbehälter (7) für die Produkte (10), der am oberen Teil offen und auf der Seite des stromabwärtigen Endes (13) des Förderers (5) angeordnet ist, wobei der Behälter (7) einen quadratischen oder rechteckigen Böden (22) zur Aufnahme der Produkte (10) umfasst, der mit seitlichen Trennwänden (23, 24, 25) verbunden ist, und wobei der Behälter (7) derart angeordnet ist, dass sein Boden (22) mindestens unter der gesamten Fläche S, über die das stromabwärtige Ende (13) des Förderers (5) gleitet, angeordnet ist, so dass die geernteten Produkte (10) durch einfache Schwerkraft in den Behälter (7) fallen können, wobei sie im Wesentlichen in Reihen auf mindestens einem Teil des Bodens (22) dieses letztgenannten verteilt werden, wobei der Behälter (7) mit einer ersten Endwand (23), über der sich der Endlosförderer (5) verschieben soll, mit einer zweiten gegenüber liegenden Endwand (24) und mindestens einer Längsseitenwand (25) versehen ist, die die Endwände (23, 24) verbindet, **dadurch gekennzeichnet, dass** die erste Endwand (23) eine geeignete Struktur hat, um ihre Erweiterung von einer unteren Position ihres oberen Randes (49) unter dem Niveau des oberen Randes der anderen Wände (24, 25) bis in eine obere Position ihres oberen Randes (49) zu ermöglichen, die im Wesentlichen dem Niveau des oberen Randes der anderen Wände (24, 25) entspricht, wobei das Stützgestell (3) der Maschine abnehmbare Befestigungsmittel (31) für den oberen Rand (49) der erweiterbaren Endwand (23) umfasst, und wobei der Behälter (7) auf vertikal beweglichen Stützmitteln (26) montiert ist, die mit Betätigungsmitteln (27) verbunden sind, um seine Verschiebung nach unten im Zuge seiner Befüllung zu gewährleisten und gleichzeitig das Anheben der erweiterbaren Wand (23) sicherzustellen.

2. Erntemaschine nach Anspruch 1, **dadurch gekennzeichnet, dass** der Förderer (5) mit Positionsfühlern (33, 34) verbunden ist, die dazu ausgeführt sind, die zwei äußersten Positionen seiner Gleitbewegung zu erfassen, um die Umkehr seiner Verschiebebewegung durch die zugehörigen Betätigungsmittel (20) zu steuern.

3. Erntemaschine nach einem der Ansprüche 1 oder 2, **dadurch gekennzeichnet, dass** die Gleitfläche S im Wesentlichen der Oberfläche des Bodens (22) des Behälters (7) entspricht, wobei der Boden (22) des Behälters (7) zur Gänze oder gleichsam zur Gänze unter der Fläche S positioniert ist.

4. Erntemaschine nach einem der Ansprüche 1 bis 3, **dadurch gekennzeichnet, dass** der Endlosförderer (5) mit Führungsmitteln in Form von Rollen (18), die in Gleitschienen (19) laufen, versehen und mit Betätigungsmitteln in Form von Zylinder(n) (20) verbunden ist.

5. Erntemaschine nach einem der Ansprüche 1 bis 4, **dadurch gekennzeichnet, dass** das Endlosband (11) des Förderers (5) beim Vorschub derart gesteuert wird, dass es im Wesentlichen dieselbe Geschwindigkeit im Raum bewahrt, unabhängig davon, ob der Förderer (5) unbeweglich ist oder sich in die eine oder andere Richtung verschiebt, um ein regelmäßiges oder im Wesentlichen regelmäßiges Ablegen der Produkte (10), die von der Ernteeinheit (4) kommen, auf dem Band (11) zu gewährleisten.

6. Erntemaschine nach einem der Ansprüche 1 bis 5, **dadurch gekennzeichnet, dass** der Förderer (5) dazu ausgeführt ist, über eine Fläche S im Wesentlichen von einer ersten Endwand (23) des Behälters (7), über der er sich verschiebt, bis im Wesentlichen zu einer zweiten Endwand (24), die gegenüber angeordnet ist, zu gleiten, wobei die Verschiebebewegung des Förderers (5) von der ersten Wand (23) bis im Wesentlichen zur zweiten Wand (24) der "Hinbewegung" entspricht, die mit dem angehaltenen Endlosband (11) erfolgt, um das Ablegen der Produkte (10) zu vermeiden, und die Verschiebebewegung des Förderers (5) von im Wesentlichen der zweiten Wand (24) bis zur ersten Wand (23) der "Rückbewegung" des Förderers (5) entspricht, die mit dem Endlosband (11) in Bewegung erfolgt, um das Ablegen der Produkte (10) im Behälter (7) zu gewährleisten.

7. Erntemaschine nach Anspruch 2, **dadurch gekennzeichnet, dass** die Stützmittel (26) des Behälters (7) mit Betätigungsmitteln (27) verbunden sind, die von mindestens einem der Positionsfühler (33, 34) des Förderers (5) gesteuert werden.

8. Erntemaschine nach Anspruch 7, **dadurch gekennzeichnet, dass** die Stützmittel (26, 27) des Behälters (7) sein schrittweises Absenken nach jedem Ablegezyklus der Produktreihen (10) gewährleisten, wobei der entsprechende Absenkschritt an die Dimension und die Menge von bei jedem Zyklus abgelegten Produkten angepasst ist, wobei die betreffende Absenkbewegung von einer relativen Verschlussbewegung der erweiterbaren Endwand (23) begleitet ist, deren oberer Rand (49) am Stützgestell (3) befestigt ist.

9. Erntemaschine nach einem der Ansprüche 1 bis 8, **dadurch gekennzeichnet, dass** ihr Behälter (7) eine erweiterbare Endwand (23) umfasst, die von mindestens zwei Teleskopklappen gebildet ist, wobei die eine fest (46) und die andere beweglich (48) ist.

10. Erntemaschine nach Anspruch 9, **dadurch gekennzeichnet, dass** ihr Behälter (7) eine erweiterbare Endwand (23) umfasst, die von mindestens drei Teleskopklappen (46, 47, 48) gebildet ist, wobei die untere Klappe (46) fest und die anderen Klappen (47, 48) beweglich sind, wobei die beweglichen Klappen mit Mitteln versehen sind, die das Ausfahren der direkt darunter liegenden beweglichen Klappe ermöglichen, wenn sie selbst völlig ausgefahren ist.

11. Erntemaschine nach einem der Ansprüche 1 bis 10, **dadurch gekennzeichnet, dass** ihr Behälter (7) eine erweiterbare Endwand (23) umfasst, deren oberer Rand (49) mit Mitteln (30) versehen ist, die ihre Befestigung an einem geeigneten Verhakungssystem (31) ermöglichen, das auf dem Gestell (3) der Maschine vorgesehen ist.

12. Erntemaschine nach einem der Ansprüche 1 bis 11, **dadurch gekennzeichnet, dass** ihr Behälter (7) eine erweiterbare Endwand (23) umfasst, die mit Mitteln (30) versehen ist, die ihre Verriegelung in der ausgefahrenen Position ermöglichen.

13. Erntemaschine nach einem der Ansprüche 1 bis 12, **dadurch gekennzeichnet, dass** ihr Behälter (7) eine seitliche Längswand (25) umfasst, die eine feste untere Platte (43) umfasst, an deren oberem Rand eine bewegliche obere Platte (44) angelenkt ist, die mit Mitteln versehen ist, die ihre Verriegelung (45) in Trennposition ermöglichen.
